# EUROPÄISCHE PATENTANMELDUNG

(11) **EP 0 895 834 A2**
(43) Veröffentlichungstag der Anmeldung: **10.02.1999**
(21) Anmeldenummer: 98113552.8
(22) Anmeldetag: 21.07.1998
(51) Int. Cl.: B25H 1/12, B25H 1/00

(54) **Zweiteiliger Kasten mit Arbeitsflächen**

(30) Priorität: 06.08.1997 DE 29714029 U
(71) Anmelder: Pommerenke, Uwe, 25718 Friedrichskoog (DE)
(72) Erfinder: Pommerenke, Uwe, 25718 Friedrichskoog (DE)
(74) Vertreter: Richter, Joachim, Dipl.-Ing.

(57) **Zusammenfassung**

Bei einer Anordnung zum Herstellen und Bearbeiten von Werkstücken (36) mit einer Arbeitsfläche ist dieses zweiteilig ausgebildet, wobei eine erste Arbeitsfläche (14) einen Teil eines Bodens eines Bodenteiles (10) und eine zweite Arbeitsfläche (16) einen Teil eines Deckels eines Deckelteiles (12) bildet, wobei das Bodenteil (10) und das Deckelteil (12) zu einem Kasten (100) mit einem Innenraum zusammensetzbar sind.

## Beschreibung

Die Erfindung betrifft eine Anordnung zum Herstellen und Bearbeiten von Werkstücken, mit einer Arbeitsfläche, gemäß dem Oberbegriff des Anspruchs 1.

Es sind beispielsweise Holz- oder Kunststoffbausätze für Kinder und Erwachsene bekannt, die alle erforderlichen Rohbauteile zur Erstellung eines Werkstückes beinhalten. Ein Benutzer muß lediglich die Rohbauteile entsprechend bearbeiten, wie beispielsweise Sägen oder Feilen, und mit entsprechenden Haftmitteln, wie beispielsweise Klebstoff oder Leim oder Holzleim, zusammenfügen. Der Nachteil ist jedoch, daß eine entsprechende Werkbank bzw. Arbeitsfläche benötigt wird, auf der das Bearbeiten und das Zusammenfügen mit entsprechenden Werkzeugen erfolgen kann. Derartiges steht jedoch nicht immer und überall zur Verfügung.

Es ist Aufgabe der vorliegenden Erfindung, eine Anordnung der obengenannten Art zur Verfügung zu stellen, welche die obengenannten Nachteile beseitigt und ohne zusätzliche externe Hilfsmittel überall einsetzbar ist.

Diese Aufgabe wird durch eine Anordnung der o. g. Art mit den in Anspruch 1 gekennzeichneten Merkmalen gelöst.

Dazu ist es erfindungsgemäß vorgesehen, daß die Arbeitsfläche wenigstens zweiteilig ausgebildet ist, wobei wenigstens eine erste Arbeits-fläche wenigstens einen Teil eines Bodens eines Bodenteiles und wenigstens eine zweite Arbeitsfläche wenigstens einen Teil eines Deckels eines Deckelteiles bildet, wobei Bodenteil und Deckelteil zu einem Kasten mit einem Innenraum zusammensetzbar sind.

Dies hat den Vorteil, daß eine einfach zu transportierende und überall ohne zusätzliche Vorkehrungen einsetzbare Anordnung zum Herstellen und Bearbeiten von Werkstücken in Form eines erfindungsgemäßen Werkstattkastens geschaffen ist, da der Kasten in transportabler bzw. mobiler Weise eine Arbeitsfläche zur Verfügung stellt. Gleichzeitig sind beim Transport oder bei der Lagerung der Anordnung in zusammengesetzten Zustand alle ggf. in einem Inneren des Kastens angeordnete Zubehörteile durch den Kasten geschützt und gleichzeitig platzsparend aufgeräumt.

Beispielsweise besitzen zahlreiche Schulen keine Bastelräume, so daß sog. Werkunterricht entfallen muß. Die vorliegende Erfindung ermöglicht es nunmehr, daß diese Schulen mit der erfindungsgemäßen Anordnung in Form eines Werkstattkastens auch ohne besondere Werkräume einen Werkunterricht oder derartige Aktivitäten ihren Schüler anbieten können, z.B. Freiarbeit oder im offenen Unterricht. Der erfindungsgemäße Werkstattkasten ist auf jedem Tisch, Klassentisch und dergleichen aufsetzbar, so daß z.B. der Schultisch oder Schreibtisch Werkbankfunktionen erhält, ohne Umbaumaßnahmen am Tisch selbst ausführen zu müssen. Ferner findet der erfindungsgemäße Werkstattkasten in vorteilhafter Weise Anwendung in Privathaushalten mit Kindern, wo ebenfalls keine entsprechenden Werkräume vorhanden sind. Darüber hinaus sind übliche Werkräume für Kinder wegen einer hohen Verletzungsgefahr nicht nutzbar. Der erfindungsgemäße Werkstattkasten schafft auch hier Abhilfe.

Vorzugsweise Weitergestaltungen der Vorrichtung sind in den Unteransprüchen beschrieben.

Ein von der Umgebung abgegrenzter Arbeitsbereich in den beiden Teilen des Kastens, welcher die Umgebung vor Verschmutzung und Beschädigung durch Werkarbeiten mit der erfindungsgemäßen Anordnung schützt wird dadurch erzielt, daß Bodenteil und Deckelteil jeweils Seitenwandungen aufweisen, welche beim Zusammensetzen der beiden Teile miteinander fluchten und den Innenraum seitlich vollständig umschließen. Die Kastenhälften bilden dabei wannenartige Auffangbehälter für Rückstände bzw. Abfallstoffe, welche bei Werkarbeiten ggf. anfallen. Ferner bilden die Seitenwände zusammen mit den Arbeitsflächen einen ge-schlossenen Innenraum, so daß die Anordnung eine Doppelfunktion erfüllt, nämlich einerseits in aufgeklappten Zustand eine Werkfläche zur Verfügung stellt und andererseits in zusammengeklappten Zustand einen Lager- bzw. Aufbewahrungskasten bildet.

In einer vorteilhaften Ausführungsform ist wenigstens ein Teil der Seitenwandungen am Deckelteil und/oder Bodenteil lösbar befestigt oder mittels Scharnieren zusammen- und aufklappbar. Dies hat den Vorteil, daß Rückstände oder Abfälle, welche während der Werkarbeiten in dem Bodenteil bzw. dem Deckelteil aufgefangen werden, einfach und sauber aus der erfindungsgemäßen Anordnung dadurch entfernt werden können, daß das lösbare Teil der Seitenwandung entfernt und sich im entsprechenden Teil des Kastens befindliche Rückstände aus der sich so ergebenden Öffnung ausgeleert werden.

Zweckmäßigerweise ist die lösbare Verbindung eine Steckverbindung mit wenigstens einem Steckloch an der entsprechenden Seitenwandung und/oder am entsprechenden Teil des Kastens und mit wenigstens einem in das Steckloch steckbaren Zapfen an der entsprechenden Seitenwandung und/oder am entsprechenden Teil des Kastens. Die Kastenteile sind über Scharniere miteinander verbunden. Auch Hakenscharniere können verwendet werden, die sich beim Aufklappen der Kastenteile trennen.

In einer besonders vorteilhafte Ausführungsform ist auf der ersten Arbeitsfläche, insbesondere auf der Arbeitsfläche des Bodenteils, eine Drehscheibe drehbar gelagert, welche einen lösbar mit dieser befestigten Auflagebock aufweist, wobei die lösbare Befestigung zweifach auf der Drehscheibe für eine rechtshändige Bedienung und eine linkshändige Bedienung ausgebildet ist. Zweckmäßigerweise umfaßt dabei die lösbare Befestigung für den Auflagebock auf der Drehscheibe ausgebildete Löcher, in die entsprechend am Auflagebock ausgebildete Stifte eingreifen und die lösbare Verbindung umfaßt vorzugsweise eine Schraubverbindung zwischen dem Auflagebock und der Drehscheibe. Dies hat den Vorteil, daß ein zu bearbeitender Gegenstand auf der Drehscheibe und dem Auflagebock in entsprechender Weise bezüglich eines Bearbeitungswerkzeuges zur Bearbeitung ausrichtbar und festsetzbar ist.

Es ergibt sich eine besonders komfortable Handhabung mit maßgenauen Werkergebnissen, wenn eine Auflagefläche des Auflagebockes in gleicher Ebene wie die Oberkante der umgebenden Seitenwandungen des Bodenteiles angeordnet ist. Die Oberfläche des Auflagebockes ist aufgerauht bzw. weist eine schmirgelpapierartige Gestaltung zur besseren Fixierung der Werkstücke auf.

Auf der erfindungsgemäßen Anordnung durchgeführte Werkarbeiten werden in vorteilhafter Weise dadurch erleichtert und deren Präzision bzw. Ausführungsgenauigkeit dadurch erhöht, daß ein Befestigungsmittel zum Ausbilden einer lösbaren Festsetzung der Drehscheibe auf der ersten Arbeitsfläche, insbesondere auf der Arbeitsfläche des Bodenteils, vorgesehen ist, wobei das Befestigungsmittel eine am Umfang der Drehscheibe angeordnete Schraube mit einer Flügelmutter und einer Unterlegscheibe sein kann. Zwischen der Unterlegscheibe und der ersten Arbeitsfläche wird dabei die Drehscheibe derart durch Festziehen der Flügelmutter eingeklemmt, daß ein weiteres Verdrehen der Drehscheibe verhindert ist.

Zeckmäßigerweise ist auf der ersten Arbeitsfläche, insbesondere auf der Arbeitsfläche des Bodenteiles, wenigstens ein Bearbeitungswerkzeug angeordnet.

Für eine einfache, sichere und genaue Handhabung des Bearbeitungswerkzeuges auch durch ungeübte Personen und zum erzielen einer verminderten Verletzungsgefahr bei der Handhabung ist in besonders vorteilhafter Weise auf der ersten Arbeitsfläche, insbesondere auf der Arbeitsfläche des Bodenteils, ein Führungsmittel für das Bearbeitungswerkzeug angeordnet, wobei zweckmäßigerweise das Führungsmittel ein hin- und herbewegbares Element umfaßt, welches mit einem Handgriff des Bearbeitungswerkzeuges verbunden ist.

Eine optimale Ausrichtung des Bearbeitungswerkzeuges für eine Bearbeitung eines Werkstückes erzielt man dadurch, daß das Bearbeitungswerkzeug um eine Achse der Verbindung mit dem hin- und herbewegbaren Element schwenkbar ist. Ferner läßt sich das Bearbeitungswerkzeug mittels dieser Schwenkmöglichkeit derart in eine Transportstellung abklappen, daß es ein Zusammensetzten der Teile des Kastens nicht behindert.

Eine weitere Verbesserung des Handhabungskomforts und der Sicherheit bezüglich einer Verletzungsgefahr erzielt man dadurch, daß das Führungsmittel erste Anschläge umfaßt, welche entlang eines Führungsweges einen Bewegungshub des hin- und herbewegbaren Elementes begrenzen, und/oder daß das Führungsmittel zweite Anschläge umfaßt, welche eine Bewegung seitlich zu einer Bewegungsrichtung des hin- und herbewegbaren Elementes verhindern.

In einer besonders bevorzugten Ausführungsform ist das hin- und herbewegbare Element eine Trägerplatte mit seitlich daran angeordneten Rollen, wobei eine Befestigungsschelle die Trägerplatte mit dem Handgriff verbindet.

Man erzielt eine flexible Anordnung für den Auflagebock auf der Drehscheibe und das auf den Auflagebock auf- und festgelegte Werkstück, beispielsweise wahlweise für Rechts- oder Linkshänder oder für unterschiedliche Gehrungsschnitte, dadurch, daß das Führungsmittel für das Bearbeitungswerkzeug derart angeordnet ist, daß bei Hin- und Herbewegung des Bearbeitungswerkzeuges dessen Wirkachse im wesentlichen über den Drehpunkt der Drehscheibe verläuft. Der Drehpunkt der Drehscheibe dient dabei nämlich unmittelbar als Bezugspunkt für einen Wirkbereich des Bearbeitungswerkzeuges und erleichtert die Ausrichtung des zu bearbeitenden Werkstückes, wobei die Führung durch das Führungsmittel und gleichzeitig innerhalb des Werkstückes erfolgt. Voraussetzung hierfür ist die Verwendung eines breitflächigen Sägeblattes für die Säge.

Zweckmäßigerweise ist das Bearbeitungswerkzeug ein Schneidwerkzeug, wie beispielsweise eine Säge und/oder eine Metallsäge, wobei die Wirkachse des Bearbeitungswerkzeuges die Längsachse eines Schneidelementes des Schneidwerkzeuges ist, und/oder ein spanabhebendes Werkzeug, wie beispielsweise ein Hobel und/oder eine Feile und/oder eine Metallfeile, wobei die Wirkachse des Bearbeitungswerkzeuges eine Mittelachse eines spanabhebenden Bereiches des spanabhebendes Werkzeugs ist, und/oder ein Bohrwerkzeug, insbesondere ein Holz- und/oder Metallbohrer, wobei die Wirkachse des Bearbeitungswerkzeuges eine Drehachse des Bohrwerkzeuges ist.

Eine universelle Einsetzbarkeit, beispielsweise für Klebe- oder Leimarbeiten, der zweiten Arbeitsfläche bzw. des Deckelteils erzielt man dadurch, daß die zweite Arbeitsfläche eine Antihaftschicht aufweist, wobei die Antihaftschicht vorzugsweise derart ausgebildet ist, daß ein Klebstoff oder Leim nicht an der zweiten Arbeitsfläche haftet.

In einer bevorzugten Ausgestaltung der erfindungsgemäßen Anordnung ist am Umfang der Drehscheibe wenigstens über einen vorbestimmten Bereich eine Maßeinteilung und/oder Gradeinteilung und/oder an einer oberen Kante der Seitenwandungen wenigstens in einem vorbestimmten Bereich eine Maßeinteilung vorgesehen.

Nachstehend wird die Erfindung anhand der beigefügten Zeichnungen näher erläutert. Diese zeigen in
- Fig. 1: eine bevorzugte Ausführungsform einer erfindungsgemäßen Anordnung zum Herstellen und Bearbeiten von Werkstücken in einer perspektivischen Ansicht,
- Fig. 2: in einer Aufsicht,
- Fig. 3: in einer weiteren Aufsicht,
- Fig. 4: in einer weiteren perspektivischen Ansicht,
- Fig. 5.: in einer weiteren perspektivischen Ansicht,
- Fig. 6: in einer vergrößerten Aufsicht,
- Fig. 7: bei der Handhabung durch einen Benutzer in einer perspektivischen Ansicht,
- Fig. 8: bei der Handhabung durch einen Benutzer in einer vergrößerten perspektivischen Ansicht,
- Fig. 9: bei der Handhabung durch einen Benutzer in einer weiteren vergrößerten perspektivischen Ansicht,
- Fig. 10: in zusammengeklappten Zustand in einer perspektivischen Ansicht,
- Fig. 11: in gestapeltem Zustand in einer weiteren perspektivischen Ansicht.

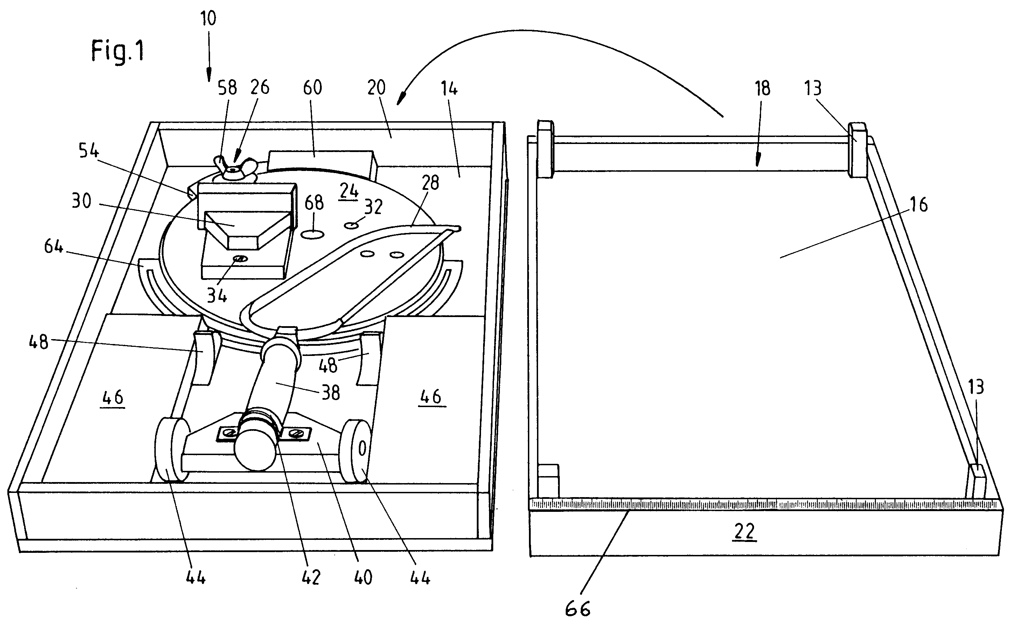

Die in Fig. 1 dargestellte bevorzugte Ausführungsform einer erfindungsgemäßen Anordnung 100 zum Herstellen und Bearbeiten von Werkstücken umfaßt ein Bodenteil 10 mit einer ersten Arbeitsfläche 14 und ein Deckelteil 12 mit einer zweiten Arbeitsfläche 16. Die zweite Arbeitsfläche 16 des Deckelteils 12 ist mit einer Antihaftschicht oder Kunststoffplatte 18 versehen, welche ein anhaften von einem Klebemittel, das zum zusammenkleben von gefertigten Einzelteilen zu einem Gesamtgebilde verwendet wird, nicht zuläßt. Auf dieser Innenwandfläche 16 des Deckelteiles 12 klebt ein Benutzer, beispielsweise ein Schüler oder Bastler, die zuvor angefertigten Teile zusammen und überschüssiger Klebstoff oder verschmierter Klebstoff sammelt sich im Deckelteil 12, aber haftet nicht an dessen beschichteter Oberfläche 16 an, so daß Klebstoffreste mühelos entfernbar sind. Dabei ist es vorteilhaft, wenn die Seitenwandflächen des Deckelteils innenwandseitig mit einer Antihaftschicht versehen sind.

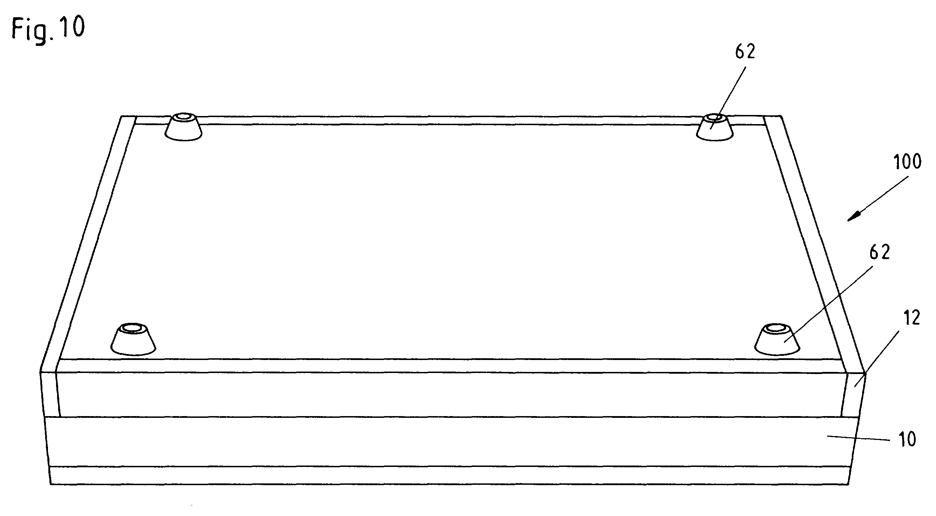

Deckelteil 12 und Bodenteil 10 sind jeweils mit umlaufenden Seitenwandungen 20 und 22 ausgebildet, welche beim aufeinandersetzen der beiden Teile 10 und 12 miteinander fluchten (vgl. Fig. 10) und einen geschlossenen Innenraum eines Kastens bzw. eines Werkstattkastens 100 ausbilden. Dieser Kasten 100 ist frei transportierbar und lagerbar. Benachbart zu den Seitenwandungen 22 des Deckelteiles 12 sind Führungszapfen 13 vorgesehen, welche ein fluchtendes aufeinander liegen der Seitenwandungen 20 und 22 beim Zusammensetzten der Teile 10 und 12 gewährleisten.

Wie sich ferner insbesondere aus den Fig. 1 bis 5 ergibt, ist im Bodenteil 10 folgendes angeordnet: Eine Drehscheibe 24, eine Flügelschraube 26 zum fixieren bzw. festsetzten der Drehscheibe 24 und ein Bearbeitungswerkzeug 28, nämlich eine Säge 28. Auf der Drehscheibe 24 ist ein trapezförmiger Auflagebock 30 angeordnet, welcher mit nicht dargestellten Stiften in Löcher 32 in der Drehscheibe 24 greift. Diese Löcher 32 sind auf der Drehscheibe 24 in zwei Sätzen vorhanden, so daß der Auflagebock 30 an zwei verschiedenen Positionen auf der Drehscheibe 24 platzierbar ist. Auf diese Weise kann die Anordnung 100 sowohl von einem Links- als auch einem Rechtshänder bequem und komfortabel bedient werden. Der Auflagebock 30 ist ferner mit einer Schraube 34 auf der Drehscheibe 24 lösbar befestigt.

Bei der Flügelschraube 26 ist ein Stützklotz 54 vorgesehen. Eine Beilagscheibe 56 drückt bei angezogener Flügelmutter 58 auf den Stützklotz 54 und die Drehscheibe 24, welche dadurch gegen verdrehen festgesetzt ist. Der Stützklotz 54 schafft dabei mit der Oberfläche der Drehscheibe 24 einen ebenen Auflagepunkt für die Beilagscheibe 56, so daß diese nicht seitlich von der Drehscheibe 24 abrutscht.

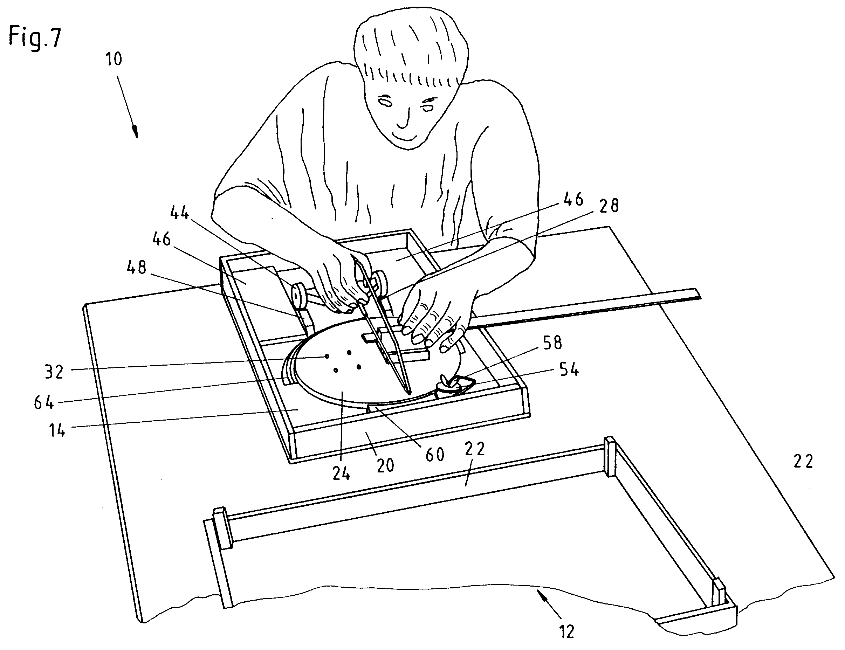

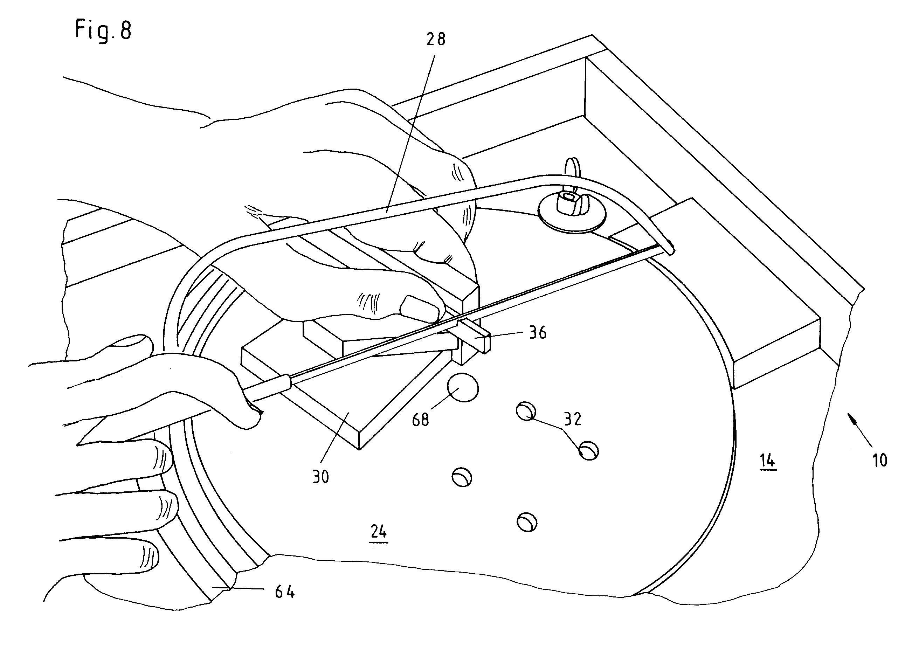

Der Auflagebock 30 ist in der beispielhaft dargestellten Ausführungsform als Winkelbock trapezförmig ausgebildet und ein zu bearbeitendes Werkstück 36 wird, wie in Fig. 7 bis 9 dargestellt, von Hand gegen den Auflagebock 30 gedrückt und damit in einer vorbestimmten Position festgesetzt. Hierbei wird die Drehscheibe 24 mit dem Auflagebock 30 ggf. gedreht, so daß ein Gehrungsschnitt mit der Säge 28 erfolgt.

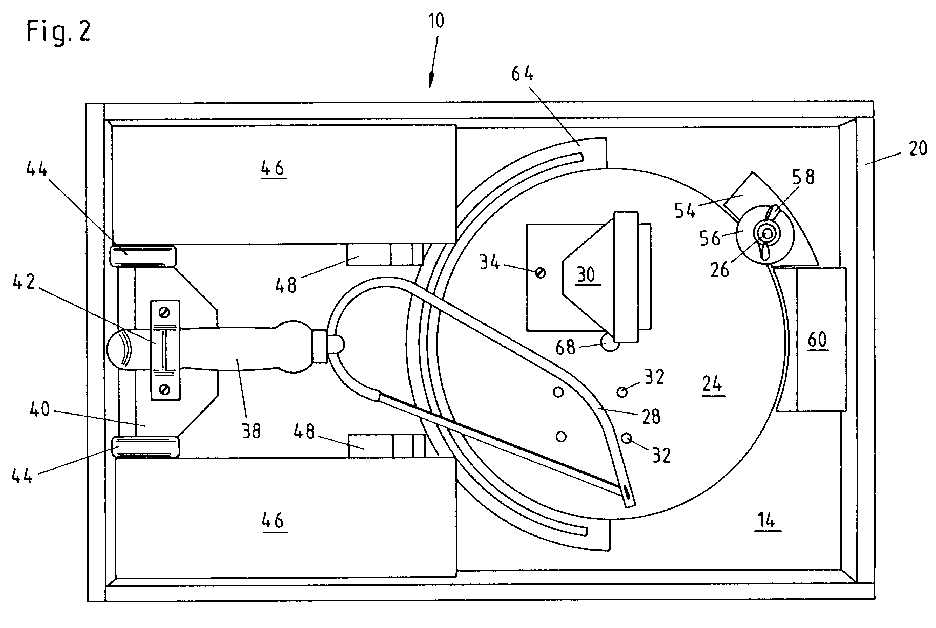

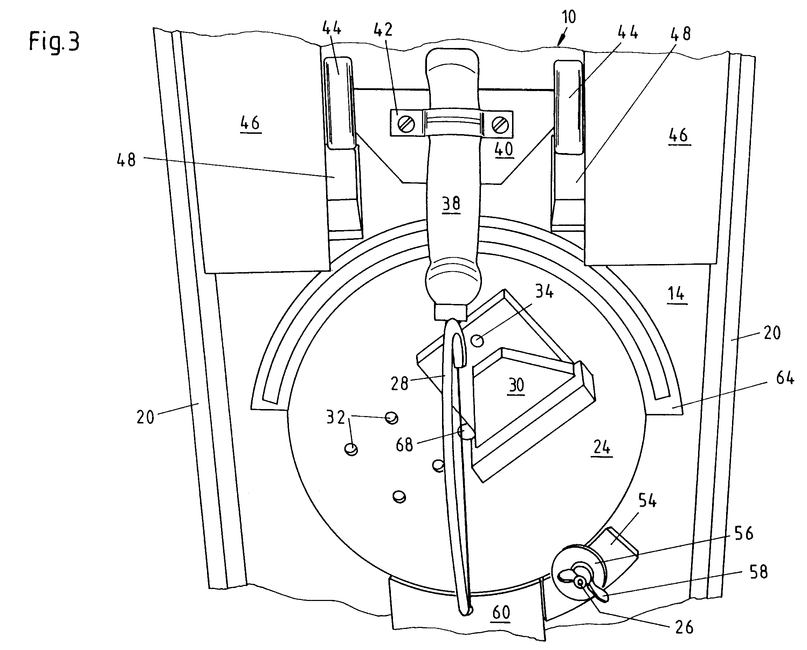

Weiterhin ist aus den Fig. 1 bis 5 ersichtlich, daß ein Handgriff 38 der Säge 28 mit einer Trägerplatte 40 mittels einer Schelle 42 derart verbunden ist, daß die Säge 28 in dieser Verbindung schwenkbar ist. Die Fig. 1 und 2 zeigen dabei die Säge 28 in eingeklappten Zustand und die Figuren 3 bis 5 zeigen die Säge 28 in aufgerichtetem, betriebsbereiten Zustand. Die Trägerplatte 40 umfaßt seitlich zwei Rollen 44, auf denen die Trägerplatte 40 mit der Säge 28 hin- und herbewegbar ist und so eine in das Werkstück 36 hineinsägende Bewegung ausführt, so daß die Führung durch die Rollen 44 und durch den jeweils erzeugten Einschnitt im Werkstück erfolgt. Eine weitere Führung ergibt sich durch seitlich bezüglich der Rollen 44 angeordnete Stoppklötze 46, an denen die Rollen 44 seitlich anschlagen. Ferner begrenzen weitere Stopper 48 die longitudinale Bewegungsfreiheit der Trägerplatte 40 und damit der Säge 28.

An einem der Trägerplatte 40 gegenüber liegenden Ende des Bodenteils 10 ist ein Klotz 60 vorgesehen, welcher verhindert, daß die Säge 28 in die Drehscheibe 24 einschneidet.

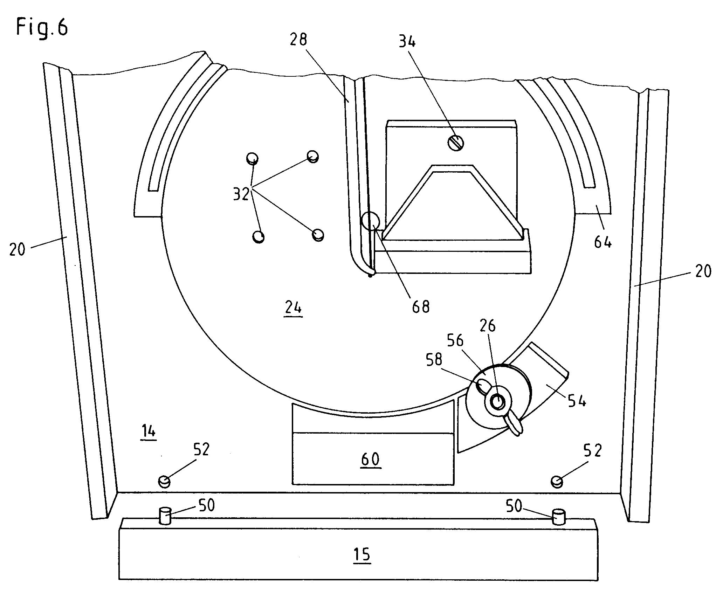

Fig. 6 zeigt beispielhaft einen lösbar befestigten Seitenwandabschnitt 15 der Seitenwandung 20 des Bodenteiles 10. An dem Seitenwandabschnitt 15 sind Zapfen 50 vorgesehene, welche beim Befestigen des Seitenwandabschnittes 15 an das Bodenteil 10 in entsprechende Löcher 52 im Bodenteil 10 greifen. Sägespäne, Holzabfälle oder dergleichen, die sich beim Bearbeiten von Gegenständen ergeben und sich im Bodenteil 10 angesammelt haben, können bei Abnahme dieses Seitenwandabschnittes 15 leicht aus dem Bodenteil 10 entfernt werden, ohne daß es zu einer Verteilung dieser Abfälle in der Umgebung des Werkstattkastens kommt.

Fig. 1 und 2 zeigen, wie bereits erwähnt, die Säge bzw. Bügelsäge 28 abgeklappt in Verpackungsstellung, d.h. der Sägebügel liegt flach auf der Drehscheibe 24 auf, was zur Folge hat, daß die Seitenwandungen 20 des Bodenteils 10 keine große Höhe aufweisen müssen, um ein zusammensetzen der beiden Teile 10 und 12 zu ermöglichen. Der Handgriff 38 der Bügelsäge 28 ist dabei mit der Schelle 42 derart mit der Trägerplatte 40 verbunden, daß der Handgriff 38 um seine Längsachse verdreht werden kann, damit die Säge 28 in Sägeposition bringbar ist. Dies ist in den Figuren 3 bis 5 dargestellt.

Die Rollen 44 an der Trägerplatte 40 sind derart dimensioniert, daß die Säge um eine Achse der Rollen 44 oder Laufräder 44 verschwenkbar ist. Auf diese Weise ist eine Sägebewegung mit sich langsam in den erzeugten Schnitt absenkenden Sägeblatt gewährleistet.

Dadurch, daß die Trägerplatte 40 mit den Rollen 44 verfahrbar zwischen den Stoppklötzen 46 angeordnet ist, kommt es bei der Sägebewegung zu keinen Behinderungen, beispielsweise durch Verkannten des Sägeblattes und zu keinen Seitenschwenkungen, wie in Fig. 3 dargestellt. Hier hat die Trägerplatte 40 mit der Säge 28 eine der Drehscheibe 24 zugekehrte Stellung eingenommen, während Fig. 2 die Ausgangsstellung zeigt.

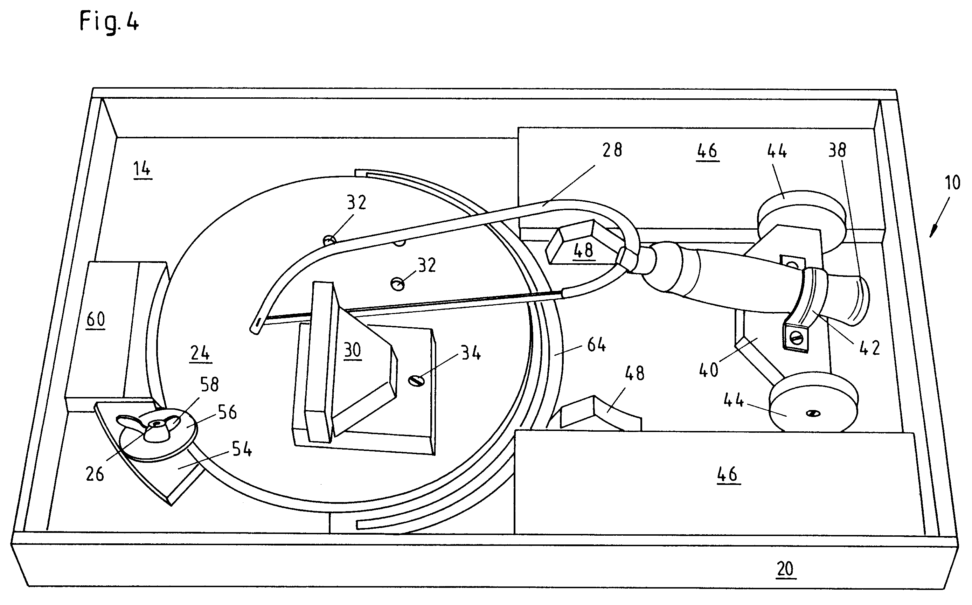

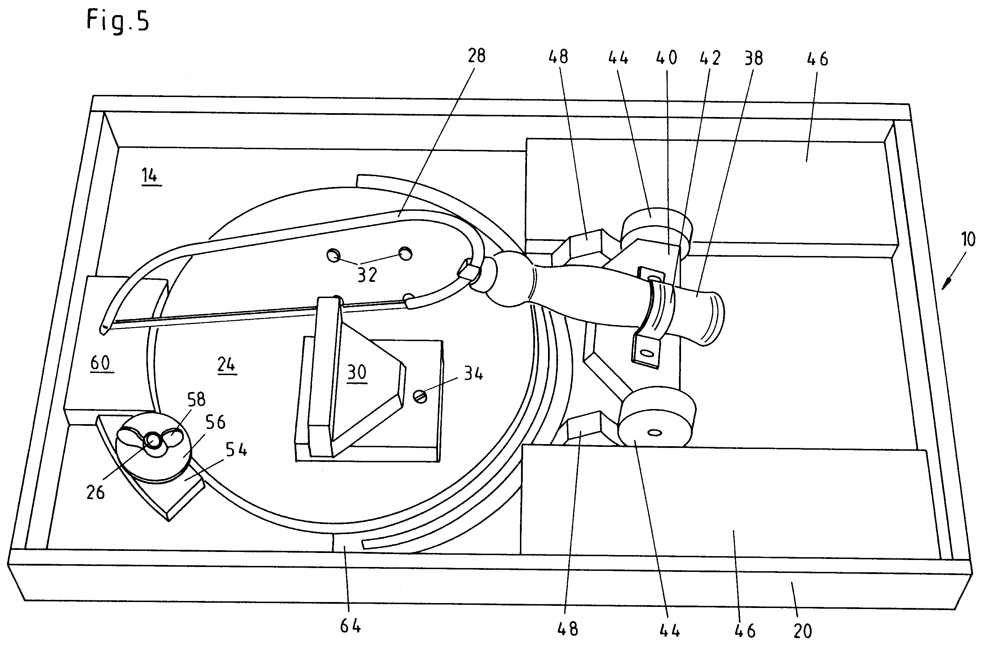

Die Fig. 4 und 5 zeigen die verschiedenen Stellungen bei der Betätigung der Säge 28. Fig. 4 zeigt die Ausgangsstellung und Fig. 5 die Endstellung. Die Länge des Sägeweges ist durch die Länge der Bewegungsbahn der Trägerplatte 40 mit deren Rollen 44 vorgegeben. Auf einer Seite der Bewegungsbahn begrenzen die Stopper 48 den Verfahrweg und auf der gegenüberliegenden Seite der Bewegungsbahn begrenzt die Seitenwandung 20 des Bodenteils 10 den Verfahrweg.

Die Führung der Säge 28 ist derart ausgebildet, daß das Sägeblatt immer über den Drehpunkt 68 der Drehscheibe 24 verläuft. Dadurch ist der eigentliche Sägetisch, nämlich der Auflagebock 30, umsteckbar, so daß er sich wahlweise rechts oder links auf der Drehscheibe 24 befindet.

Fig. 7 zeigt den geöffneten Werkstattkasten 100 und eine Anzahl verschiedener Leisten, Kanthölzer und Profilleisten, die für die Herstellung entsprechender Gegenstände erforderlich sind.

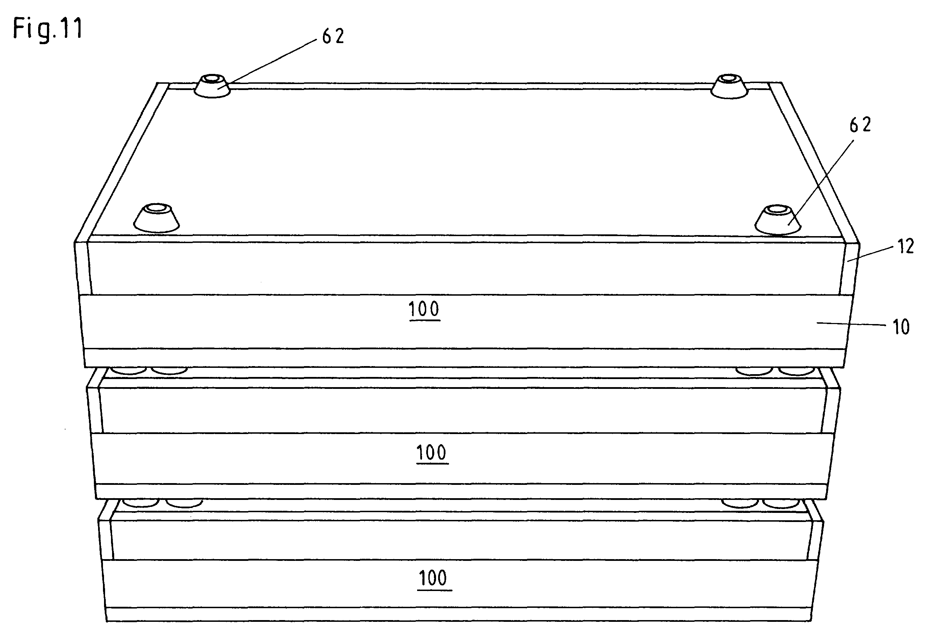

Wie aus Fig. 10 und 11 hervorgeht, ist jeder Werkstattkasten 100, der aus Bodenteil 10 und Deckelteil 12 besteht, stapelbar ausgebildet, so daß auf kleinstem Raume mehrere Werkstattkästen 100 übereinander stapelbar sind, solange diese nicht benötigt werden. Dazu sind entsprechende Erhebungen 62 vorgesehen, die z.B. als Gumminoppen ausgebildet sind und im aufgeklappten Zustand der Kastenteile einen rutschfesten Stand ermöglichen; sie sind auf den beiden Kastenteilen versteckt angeordnet, um die Kastenteile im jeweils geschlossenen Zustand übereinander stapeln zu können (Fig. 11). Fig. 11 zeigt drei entsprechend gestapelte Werkstattkästen 100.

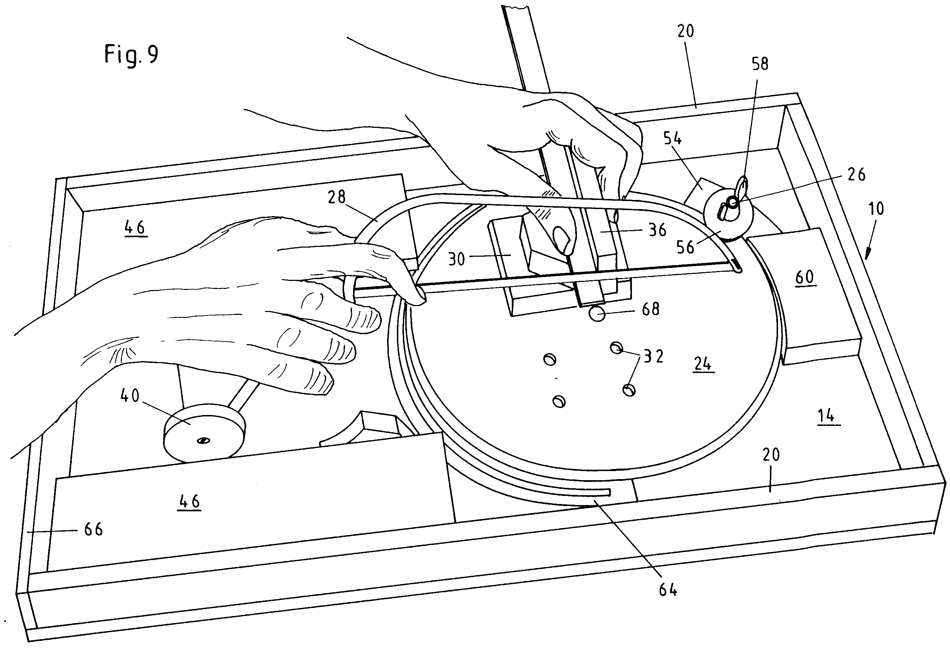

Fig. 7 bis 9 zeigen den Sägevorgang, bei dem die Säge 28 geführt von der Trägerplatte 40 und den Stoppklötzen 46 hin- und herbewegt wird. Eine insbesondere aus Fig. 9 ersichtliche Gradeinteilung 64 ist am Bodenteil 10 in einem vorbestimmten Abschnitt nahe des Umfangs der Drehscheibe 24 ausgebildet. Mindestens eine obere Kante der Seitenwandung 20 des Bodenteils 10 trägt im in Fig. 1 dargestellt eine Maßeinteilung 66, so daß vermittels dieser Maßeinteilung Längen abgelesen und beispielsweise auf zu bearbeitende Holzleisten zu übertragbar sind. Die Maßeinteilung kann auf jeder Oberkante der Seitenwände eines jeden Kastenteils aufgebracht sein.

In vorteilhafter Weise befindet sind an der Innenseite des Deckelteils und lösbar gehalten ein Lehrbogen, mit dem einem Benutzer, Schüler oder Bastler, Bastel- bzw. Bauanregungen gegeben werden. Unter einem Stichwort "sägen" sind die vorzufertigenden Einzelteile eines herzustellenden Werkes mit entsprechender Bemaßung dargestellt und an einer gegenüberliegenden Seite auf dem Lehrbogen sind unter dem Stichwort "kleben" die einzelnen Stufen des Zusammenfügens des herzustellenden Werkstückes abgebildet.

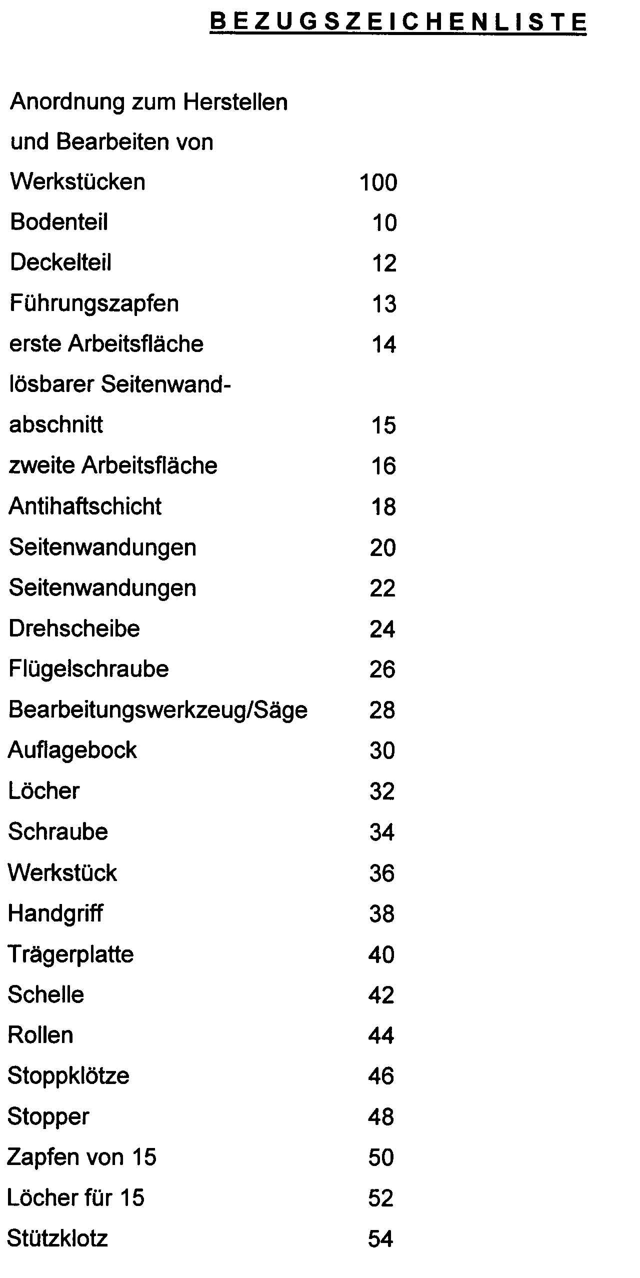

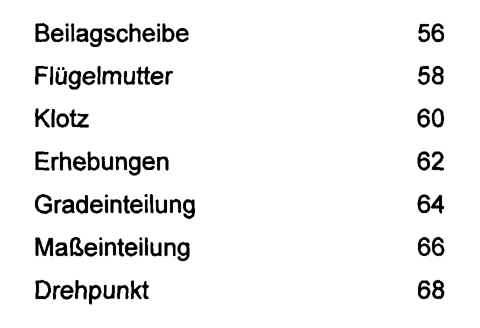

## Patentansprüche

1. Anordnung zum Herstellen und Bearbeiten von Werkstücken (36) mit einer Arbeitsfläche,
dadurch gekennzeichnet,
daß die Arbeitsfläche wenigstens zweiteilig ausgebildet ist, wobei wenigstens eine erste Arbeitsfläche (14) wenigstens einen Teil eines Bodens eines Bodenteiles (10) und wenigstens eine zweite Arbeitsfläche (16) wenigstens einen Teil eines Deckels eines Deckelteiles (12) bildet, wobei das Bodenteil (10) und das Deckelteil (12) zu einem Kasten (100) mit einem Innenraum zusammensetzbar sind.

2. Anordnung nach Anspruch 1,
dadurch gekennzeichnet,
daß Bodenteil (10) und Deckelteil (12) jeweils Seitenwandungen (20,22) aufweisen, welche beim Zusammensetzen der beiden Teile (10,12) miteinander fluchten und den Innenraum seitlich vollständig umschließen.

3. Anordnung nach Anspruch 1 oder 2,
dadurch gekennzeichnet,
daß wenigstens ein Teil der Seitenwandungen (20,22) am Deckelteil (12) und/oder Bodenteil (10) lösbar befestigt ist, wobei die lösbare Verbindung eine Steckverbindung mit wenigstens einem Steckloch (52) an der entsprechenden Seitenwandung (20,22) und/oder am entsprechenden Teil (10,12) des Kastens (100) und mit wenigstens einem in das Steckloch (52) steckbaren Zapfen (50) an der entsprechenden Seitenwandung (20,22) und/oder am entsprechenden Teil (10,12) des Kastens (100) ist.

4. Anordnung nach einem der Ansprüche 1 bis 3,
dadurch gekennzeichnet,
daß auf der ersten Arbeitsfläche (14), insbesondere auf der Arbeitsfläche (14) des Bodenteils (10), eine Drehscheibe (24) drehbar gelagert ist auf der ein Auflagebock (30) angeordnet ist.

5. Anordnung nach Anspruch 4,
dadurch gekennzeichnet,
daß die lösbare Befestigung (32,34) bevorzugter Weise eine Schraubverbindung (34) zwischen Auflagebock (30) und Drehscheibe (24) umfaßt, und zweifach auf der Drehscheibe (24) für eine rechtshändige Bedienung und eine linkshändige Bedienung ausgebildet ist, wobei die lösbare Befestigung (32,34) für den Auflagebock (30) auf der Drehscheibe (32) ausgebildete Löcher (32) umfaßt, in die entsprechend am Auflagebock (30) ausgebildete Stifte oder Auslassungen eingreifen.

6. Anordnung nach einem der Ansprüche 1 bis 5,
dadurch gekennzeichnet,
daß eine Auflagefläche des Auflagebockes (30) in gleicher Ebene wie eine Oberkante der umgebenden Seitenwandungen (20) des Bodenteiles (10) angeordnet ist, wobei die Auflagefläche zur Werkstückfixierung aufgerauht sein kann.

7. Anordnung nach einem der Ansprüche 1 bis 6,
dadurch gekennzeichnet,
daß ein Befestigungsmittel (26) zum Ausbilden einer lösbaren Festsetzung der Drehscheibe (24) auf der ersten Arbeitsfläche (14), insbesondere auf der Arbeitsfläche (14) des Bodenteils (10), vorgesehen ist und bevorzugter Weise eine am Umfang der Drehscheibe angeordnete Schraube (26) mit einer Flügelmutter (58) und einer Unterlegscheibe (56) ist.

8. Anordnung nach einem der Ansprüche 1 bis 7,
dadurch gekennzeichnet,
daß auf der ersten Arbeitsfläche (14), insbesondere auf der Arbeitsfläche (14) des Bodenteiles (10), wenigstens ein Bearbeitungswerkzeug (28) angeordnet ist.

9. Anordnung nach Anspruch 8,
dadurch gekennzeichnet,
daß auf der ersten Arbeitsfläche (14), insbesondere auf der Arbeitsfläche (14) des Bodenteils (10), ein Führungsmittel (40,42,44,46,48) für das Bearbeitungswerkzeug (28) angeordnet ist.

10. Anordnung nach Anspruch 9,
dadurch gekennzeichnet,
daß das Führungsmittel ein hin- und herbewegbares Element (40, 44) umfaßt, welches mit einem Handgriff (38) des Bearbeitungswerkzeuges (28) verbunden ist.

11. Anordnung nach Anspruch 10,
dadurch gekennzeichnet,
daß das Bearbeitungswerkzeug (28) um eine Achse der Verbindung (42) mit dem hin- und herbewegbaren Element (40,44) schwenkbar ist.

12. Anordnung nach einem der Ansprüche 1 bis 11,
dadurch gekennzeichnet,
daß das Führungsmittel erste Anschläge (46) umfaßt, welche entlang eines Führungsweges einen Bewegungshub des hin- und herbewegbaren Elementes (40,44) begrenzen.

13. Anordnung nach einem der Ansprüche 1 bis 11,
dadurch gekennzeichnet,
daß das Führungsmittel zweite Anschläge (48) umfaßt, welche eine Bewegung seitlich zu einer Bewegungsrichtung des hin- und herbewegbaren Elementes (40,44) verhindern.

14. Anordnung nach einem der Ansprüche 1 bis 13,
dadurch gekennzeichnet,
daß das hin- und herbewegbaren Element eine Trägerplatte (40) mit seitlich daran angeordneten Rollen (44) ist, wobei eine Befestigungsschelle (36) die Trägerplatte (40) mit dem Handgriff (38) verbindet.

15. Anordnung nach einem der Ansprüche 1 bis 14,
dadurch gekennzeichnet,
daß das Führungsmittel für das Bearbeitungswerkzeug (28) derart angeordnet ist, daß bei hin- und Herbewegung des Bearbeitungswerkzeuges (28) dessen Wirkachse im wesentlichen über den Drehpunkt (68) der Drehscheibe (24) verläuft.

16. Anordnung nach einem der Ansprüche 1 bis 15,
dadurch gekennzeichnet,
daß das Bearbeitungswerkzeug (28) ein Schneidwerkzeug, wie beispielsweise eine Säge und/oder eine Metallsäge ist.

17. Anordnung nach Anspruch 16,
dadurch gekennzeichnet,
daß die Wirkachse des Bearbeitungswerkzeuges (28) die Längsachse eines Schneidelementes des Schneidwerkzeuges ist.

18. Anordnung nach einem der Ansprüche 1 bis 15,
dadurch gekennzeichnet,
daß das Bearbeitungswerkzeug (28) ein spanabhebendes Werkzeug, wie beispielsweise ein Hobel und/oder eine Feile und/oder eine Metallfeile ist, wobei bevorzugterweise die Wirkachse des Bearbeitungswerkzeuges (28) eine Mittelachse eines spanabhebenden Bereiches des spanabhebendes Werkzeugs ist.

19. Anordnung nach einem der Ansprüche 1 bis 18,
dadurch gekennzeichnet,
daß das Bearbeitungswerkzeug (28) ein Bohrwerkzeug, insbesondere ein Holz- und/oder Metallbohrer ist, wobei bevorzugterweise die Wirkachse des Bearbeitungswerkzeuges (28) eine Drehachse des Bohrwerkzeuges ist.

20. Anordnung nach einem der Ansprüche 1 bis 19,
dadurch gekennzeichnet,
daß die zweite Arbeitsfläche (16) und die Innenwandfläche der seitlichen Umrandung eine Antihaftschicht (18), insbesondere eine Kunststoffplatte, aufweisen, wobei die Antihaftschicht (18) derart ausgebildet ist, daß ein Klebstoff oder Leim nicht an der zweiten Arbeitsfläche (16) haftet.

21. Anordnung nach einem der Ansprüche 1 bis 20,
dadurch gekennzeichnet,
daß am Umfang der Drehscheibe (24) wenigstens über einen vorbestimmten Bereich eine Maßeinteilung (66) und/oder Gradeinteilung (64) vorgesehen ist.

22. Anordnung nach einem der Ansprüche 1 bis 21,
dadurch gekennzeichnet,
daß an einer oberen Kante der Seitenwandungen (20,22), insbesondere der Seitenwandung (20) des Bodenteils (10), wenigstens in einem vorbestimmten Bereich eine Maßeinteilung (66) vorgesehen ist.
